# EUROPEAN PATENT APPLICATION

(11) **EP 1 908 352 A1**
(43) Date of publication of application: **09.04.2008**
(21) Application number: 06755360.2
(22) Date of filing: 23.05.2006
(51) Int. Cl.: A21D 13/00

(54) **FOOD COMPOSITION WHICH IS USED TO PRODUCE PIZZA DOUGH**

(30) Priority: 07.07.2005 ES 200501658
(71) Applicant: Brisciani, Roberto, 46700 Gandia (ES)
(72) Inventor: Brisciani, Roberto, 46700 Gandia (ES)
(74) Representative: Ungria Lopez, Javier
(86) International application number: PCT/ES2006/000274
(87) International publication number: WO 2007/006820

(57) **Abstract**

The invention relates to a food composition which is used to produce a pizza dough, comprising three main ingredients, namely: wheat flour, salt and brewers' yeast. In addition, other complementary ingredients can be added to the aforementioned composition by adding a single ingredient, several ingredients or all possible ingredients simultaneously. Once the composition has been mixed, water and/or milk are added and the composition is kneaded in order to produce the desired pizza dough.

## Description

### OBJECT OF THE INVENTION

As stated in the title of this descriptive specification, the present invention relates to a food composition used to produce pizza dough, which only needs to be hydrated and kneaded in order to obtain professional dough without any need for qualified technical personnel.

This pizza dough is thus obtained quickly and simply, modifying the entire manufacturing process existing to date, reducing the necessary steps that used to be required.

### PRIOR ART OF THE INVENTION

In order to produce pizza dough, for many years one used to proceed as follows. In principle, a minimum of five ingredients were used, which had to be weighed out separately so that they would be in the right proportion according to the corresponding formula or recipe, and they would be mixed in a certain order. This implied errors and losses of time, making the work longer and tedious, and requiring professionals with a knowledge of the sequence and proportion of each ingredient.

### DESCRIPTION OF THE INVENTION

With the aim of achieving the objectives and avoiding the drawbacks mentioned above, the invention proposes a food composition that is used to produce pizza dough characterised in that, starting from the hydration and kneading of said composition, a professional pizza dough is obtained.

This mixture comprises in principle:
- Soft wheat flour, between 50% and 99%.
- Salt, between 0.5% and 10%.
- Brewers' yeast, between 0.1 % and 20%.
- Other complementary ingredients with a percentage between 0% and 10%, in order to obtain different types of dough, selecting at least one of the following among others:

- Rye flour.
- Wheat bran.
- Wheat semolina.
- Potato starch.
- Modified starch.
- Food fibres.
- Soya and derivatives.
- Vital wheat gluten.
- Alpha amylase.
- L cysteine.
- L ascorbic acid.
- Glucose oxidase.
- Milk powder.
- Omega 3 in powder.
- Milk whey protein.
- Pentosanase.
- Xylanase.
- Malt flour.
- Mother dough in powder.
- Starters.
- Lactic acid.

The advantage of this food composition of the invention with its different varieties is that, starting therefrom and by simply adding water and/or milk in the measure that is needed and then proceeding to carry out the kneading, a professional pizza dough can thus be obtained in a simple manner, without any need for qualified technical personnel.

### DESCRIPTION OF THE PREFERRED FORM OF EMBODIMENT

The food composition which is used to produce pizza dough starting from the hydration and kneading thereof comprises a soft wheat flour which can vary between 50% and 99%, a salt product which can vary between 0.5% and 10%, brewers' yeast between certain values which vary between 0.1 % and 20%, and a series of complementary ingredients which vary between 0% and 10%, with which the different types of dough are obtained for different specialties.

These complementary ingredients can incorporate just one of them, or two or more, or even the set of them all.

These complementary ingredients are preferably the following:
- Rye flour.
- Wheat bran.
- Wheat semolina.
- Potato starch.
- Modified starch.
- Food fibres.
- Soya and derivatives.
- Vital wheat gluten.
- Alpha amylase.
- L cysteine.
- L ascorbic acid.
- Glucose oxidase.
- Milk powder.
- Omega 3 in powder.
- Milk whey protein.
- Pentosanase.
- Xylanase.
- Malt flour.
- Mother dough in powder.
- Starters.
- Lactic acid.

Example; for a pizza dough low in calories, we start from a food composition containing
90% Soft wheat flour
1% Potato starch
3% Rye flour
1 % Natural mother dough in powder
1.3% Beet fibre
0.08% Malt extract
2.8% Salt
0.4% Yeast
0.12% Enzymes (alphamylase, glucose oxidase, xylanase)
0.3% Omega 3 in powder

Quantities for 1 kg of pizza dough
- food composition from 500 gr to 714 gr
- Water and/or milk from 286 gr to 500 gr.

## Claims

1. **FOOD COMPOSITION WHICH IS USED TO PRODUCE PIZZA** DOUGH, essentially **characterised by** comprising a mixture of ingredients which, when subjected to a later process of hydration, produces a dough for professional pizza, this mixture comprising at least:
- a soft wheat flour with a percentage that varies between 50% and 99%;
- salt in a percentage that varies between 0.5% and 10%;
- brewers' yeast which varies between 0.1 % and 20%.
- and is complemented with at least one of the complementary ingredients stated below in a percentage between 0% and 10%.
- Rye flour.
- Wheat bran.
- Wheat semolina.
- Potato starch.
- Modified starch.
- Food fibres.
- Soya and derivatives.
- Vital wheat gluten.
- Alpha amylase.
- L cysteine.
- L ascorbic acid.
- Glucose oxidase.
- Milk powder.
- Omega 3 in powder.
- Milk whey protein.
- Pentosanase.
- Xylanase.
- Malt flour.
- Mother dough in powder.
- Starters.
- Lactic acid.

2. **FOOD COMPOSITION WHICH IS USED TO PRODUCE PIZZA** DOUGH, according to claim 1, **characterised in that** the hydration can be done based on water.

3. **FOOD COMPOSITION WHICH IS USED TO PRODUCE PIZZA** DOUGH, according to claim 1, **characterised in that** the hydration can be done based on milk.

4. **FOOD COMPOSITION WHICH IS USED TO PRODUCE PIZZA** DOUGH, according to claim 1, **characterised in that** the hydration can be done based on a mixture of water and milk.
